# EUROPEAN PATENT APPLICATION

(11) **EP 4 622 163 A1**
(43) Date of publication of application: **24.09.2025**
(21) Application number: 23899624.3
(22) Date of filing: 27.10.2023
(51) Int. Cl.: H04L 7/04

(54) **FREQUENCY ADJUSTMENT METHOD AND APPARATUS, BLUETOOTH EARPHONES, STORAGE MEDIUM, AND PROGRAM PRODUCT**

(30) Priority: 08.12.2022 CN 202211572365
(71) Applicant: Guangzhou Anyka Microelectronics Co., Ltd., Guangzhou, Guangdong 510555 (CN)
(72) Inventor: PENG, Yuefeng, Guangzhou, Guangdong 510555 (CN); XIONG, Jun, Guangzhou, Guangdong 510555 (CN); YUAN, Meng, Guangzhou, Guangdong 510555 (CN); WEN, Quanyuan, Guangzhou, Guangdong 510555 (CN); HUANG, Liang, Guangzhou, Guangdong 510555 (CN); YU, Mao, Guangzhou, Guangdong 510555 (CN)
(74) Representative: HGF
(86) International application number: PCT/CN2023/127044
(87) International publication number: WO 2024/120043

(57) **Abstract**

The present application relates to a frequency adjustment method and apparatus, Bluetooth earphones, a storage medium, and a program product. The method comprises: receiving a signaling packet periodically sent by a master earphone; acquiring a Bluetooth clock of a corresponding slave earphone according to a target sample point identifier in the signaling packet; calculating a difference between a Bluetooth clock of the master earphone and the Bluetooth clock of the slave earphone to obtain a first phase difference; determining the first phase difference between the Bluetooth clock of the slave earphone and the Bluetooth clock of the master earphone; if the first phase difference meets a phase compensation condition, performing fast phase compensation processing on a clock frequency of the slave earphone according to the first phase difference; after the clock frequency of the slave earphone is adjusted, determining a second phase difference between the Bluetooth clock of the slave earphone and the Bluetooth clock of the master earphone again; and adjusting the clock frequency of the slave earphone again according to the first phase difference and the second phase difference. By using the method, the playback of a pair of earphones in the Bluetooth earphones can be accurately synchronized.

## Description

### CROSS-REFERENCE TO RELATED APPLICATIONS

The application claims priority to Chinese Patent Application No. 202211572365.2, filed on December 8, 2022, and entitled "Frequency Adjustment Method and Apparatus, Bluetooth Earphones, Storage Medium, and Program Product", which is incorporated herein by reference in its entirety.

### TECHNICAL FIELD

The present invention relates to the field of electronic device technology, particularly to a frequency adjustment method and apparatus, Bluetooth earbuds, a storage medium, and a program product.

### BACKGROUND

Bluetooth earbuds are commonly used electronic devices, which generally include two earbuds, i.e., a master earbud and a slave earbud. In the dual-earbud transmission mode of the Bluetooth earbuds, a relative phase of audio play between the master earbud and the slave earbud needs to satisfy a certain index requirement, that is, the relative phase should be less than a certain threshold value, otherwise the relative phase may cause auditory perceptible play asynchrony for the user.

However, since there exists a natural deviation between crystal oscillator frequencies of crystal oscillator components of the master earbud and the slave earbud, a relative phase difference between the master earbud and the slave earbud becomes inevitably larger over time, causing the auditory perceptible play asynchrony for the user. Accordingly, the problem of play asynchrony between the master earbud and the slave earbud of the Bluetooth earbuds needs to be solved urgently.

### SUMMARY

In view of this, for the above technical problem, it is necessary to provide a frequency adjustment method and apparatus, Bluetooth earbuds, a storage medium, and a program product capable of solving the problem of asynchronous play of dual earbuds in the Bluetooth earbuds.

In the first aspect of the present application, a frequency adjustment method is provided, which can be applied to a slave earbud of Bluetooth earbuds, and the Bluetooth earbuds include a master earbud and the slave earbud. The method may include:
receiving signaling packets periodically transmitted by the master earbud at intervals of a first time period, each signaling packet including a target sample point identifier and a Bluetooth clock of the master earbud corresponding to the target sample point identifier;
acquiring a Bluetooth clock of the slave earbud corresponding to the target sample point identifier according to the target sample point identifier;
calculating a difference between the Bluetooth clock of the master earbud and the Bluetooth clock of the slave earbud as a first phase difference;
performing rapid phase compensation processing on a clock frequency of the slave earbud according to the first phase difference when the first phase difference satisfies a phase compensation condition, the phase compensation condition including that the first phase difference is greater than or equal to a preset threshold value;
determining a second phase difference between the Bluetooth clock of the slave earbud and the Bluetooth clock of the master earbud after the clock frequency of the slave earbud is adjusted; and
re-adjusting the clock frequency of the slave earbud according to the first phase difference and the second phase difference.

In an embodiment, the step of performing the rapid phase compensation processing on the clock frequency of the slave earbud according to the first phase difference may include:
determining a first time adjustment interval, and obtaining a clock frequency difference according to the first time adjustment interval and the first phase difference;
obtaining a first update frequency according to the clock frequency of the slave earbud and the clock frequency difference;
adjusting the clock frequency of the slave earbud to the first update frequency, the first time adjustment interval referring to a time interval according to which the slave earbud adjusts the clock frequency thereof to the first update frequency.

In an embodiment, the step of determining the first time adjustment interval may include:
determining a maximum frequency adjustment value according to the clock frequency of the slave earbud;
calculating the first time adjustment interval according to the first phase difference and the maximum frequency adjustment value.

In an embodiment, the step of determining the first time adjustment interval may include:
determining a preset time adjustment interval as the first time adjustment interval, or
determining the first time period as the first time adjustment interval.

In an embodiment, the method may further include:
when the first time adjustment interval is greater than the first time period, not calculating the latest phase difference between the master earbud and the slave earbud under a condition that a signaling packet is received within the first time adjustment interval, and calculating the latest phase difference between the master earbud and the slave earbud under a condition that a signaling packet is received outside the first time adjustment interval.

In an embodiment, the step of re-adjusting the clock frequency of the slave earbud according to the first phase difference and the second phase difference may include:
calculating a target difference value between the first phase difference and the second phase difference when the second phase difference is less than the preset threshold value;
obtaining a frequency deviation according to the target difference value and the second time adjustment interval, where the second time adjustment interval refers to a time difference between time corresponding to the second phase difference and time corresponding to the first phase difference;
performing frequency synchronization adjustment processing on the clock frequency of the slave earbud according to the frequency deviation when the frequency deviation is not less than a preset frequency adjustment step;
performing accumulated phase fine-adjustment processing on the clock frequency of the slave earbud according to a minimum frequency step when the frequency deviation is less than the preset frequency adjustment step.

The step of performing the frequency synchronization adjustment processing on the clock frequency of the slave earbud according to the frequency deviation may include: obtaining a second update frequency according to the frequency deviation and the clock frequency of the slave earbud, and adjusting the clock frequency of the slave earbud to the second update frequency within the first time period.

In an embodiment, the step of performing the accumulated phase fine-adjustment processing on the clock frequency of the slave earbud according to the minimum frequency step may include:
adjusting the clock frequency of the slave earbud to a first clock frequency value within the first time period when the Bluetooth clock corresponding to the master earbud is earlier than the Bluetooth clock corresponding to the slave earbud, where the first clock frequency value is obtained by increasing the clock frequency of the slave earbud by one minimum frequency step;
adjusting the clock frequency of the slave earbud to a second clock frequency value within the first time period when the Bluetooth clock corresponding to the master earbud is later than the Bluetooth clock corresponding to the slave earbud, where the second clock frequency value is obtained by reducing the clock frequency of the slave earbud by one minimum frequency step.

In an embodiment, the method may further include:
determining whether a phase divergence condition is satisfied according to the first phase difference and the second phase difference, where the phase divergence condition including that a product of the first phase difference and the second phase difference is greater than zero and an absolute value of the first phase difference is greater than an absolute value of the second phase difference;
determining and transmitting a target frequency adjustment value to the master earbud when the phase divergence condition is satisfied, where the target frequency adjustment value is configured to instruct the master earbud to adjust the clock frequency thereof according to the target frequency adjustment value;
performing the rapid phase compensation processing on the clock frequency of the slave earbud according to the second phase difference when the phase divergence condition is not satisfied and the second phase difference is greater than the preset threshold value.

In an embodiment, the slave earbud stores a plurality of corresponding relationships between phase difference value intervals and frequency adjustment values.

The step of determining the target frequency adjustment value may include:
determining a target difference value between the first phase difference and the second phase difference;
determining a target phase difference value interval to which the target difference value belongs according to the target difference value;
determining a frequency adjustment value corresponding to the target phase difference value interval as the target frequency adjustment value.

In the second aspect of the present application, a frequency adjustment apparatus is provided, which can be applied to a slave earbud of Bluetooth earbuds, and the Bluetooth earbuds include a master earbud and the slave earbud. The apparatus may include:
a receiving module, configured to receive signaling packets periodically transmitted by the master earbud at intervals of a first time period, each signaling packet including a target sample point identifier and a Bluetooth clock of the master earbud corresponding to the target sample point identifier;
an acquisition module, configured to acquire a Bluetooth clock of the slave earbud corresponding to the target sample point identifier according to the target sample point identifier;
a calculation module, configured to calculate a difference between the Bluetooth clock of the master earbud and the Bluetooth clock of the slave earbud as a first phase difference;
a first adjustment module, configured to perform rapid phase compensation processing on the clock frequency of the slave earbud according to the first phase difference when the first phase difference satisfies a phase compensation condition, the phase compensation condition including that the first phase difference is greater than or equal to a preset threshold value;
a determination module, configured to determine a second phase difference between the Bluetooth clock of the slave earbud and the Bluetooth clock of the master earbud after the clock frequency of the slave earbud is adjusted; and
a second adjustment module, configured to re-adjust the clock frequency of the slave earbud according to the first phase difference and the second phase difference.

In an embodiment, the first adjustment module is configured to:
determine a first time adjustment interval, and obtain a clock frequency difference according to the first time adjustment interval and the first phase difference;
obtain a first update frequency according to the clock frequency of the slave earbud and the clock frequency difference;
adjust the clock frequency of the slave earbud to the first update frequency, where the first time adjustment interval refers to a time interval according to which the slave earbud adjusts the clock frequency thereof to the first update frequency.

In an embodiment, the first adjustment module is configured to:
determine a maximum frequency adjustment value according to the clock frequency of the slave earbud;
calculate the first time adjustment interval according to the first phase difference and the maximum frequency adjustment value.

In an embodiment, the first adjustment module is configured to determine a preset time adjustment interval as the first time adjustment interval, or
determine the first time period as the first time adjustment interval.

In an embodiment, the frequency adjustment apparatus may further include:
a phase calculation module configured not to calculate the latest phase difference between the master earbud and the slave earbud under a condition that a signaling packet is received within the first time adjustment interval, and configured to calculate the latest phase difference between the master earbud and the slave earbud under a condition that a signaling packet is received outside the first time adjustment interval when the first time adjustment interval is greater than the first time period.

In an embodiment, the second adjustment module is configured to:
calculate a target difference value between the first phase difference and the second phase difference when the second phase difference is less than the preset threshold value;
obtain a frequency deviation according to the target difference value and the second time adjustment interval, where the second time adjustment interval refers to a time difference between time corresponding to the second phase difference and time corresponding to the first phase difference;
perform frequency synchronization adjustment processing on the clock frequency of the slave earbud according to the frequency deviation when the frequency deviation is not less than a preset frequency adjustment step;
perform accumulated phase fine-adjustment processing on the clock frequency of the slave earbud according to a minimum frequency step when the frequency deviation is less than the preset frequency adjustment step.

The step of performing the frequency synchronization adjustment processing on the clock frequency of the slave earbud according to the frequency deviation may include: obtaining a second update frequency according to the frequency deviation and the clock frequency of the slave earbud, and adjusting the clock frequency of the slave earbud to the second update frequency within the first time period.

In an embodiment, the second adjustment module is configured to:
adjust the clock frequency of the slave earbud to a first clock frequency value within the first time period when the Bluetooth clock corresponding to the master earbud is earlier than the Bluetooth clock corresponding to the slave earbud, where the first clock frequency value is obtained by increasing the clock frequency of the slave earbud by one minimum frequency step;
adjust the clock frequency of the slave earbud to a second clock frequency value within the first time period when the Bluetooth clock corresponding to the master earbud is later than the Bluetooth clock corresponding to the slave earbud, where the second clock frequency value is obtained by reducing the clock frequency of the slave earbud by one minimum frequency step.

In an embodiment, the frequency adjustment apparatus may further include:
a divergence determination module configured to:
determine whether a phase divergence condition is satisfied according to the first phase difference and the second phase difference, where the phase divergence condition includes that a product of the first phase difference and the second phase difference is greater than zero and an absolute value of the first phase difference is greater than an absolute value of the second phase difference;
determine and transmit a target frequency adjustment value to the master earbud when the phase divergence condition is satisfied, where the target frequency adjustment value is configured to instruct the master earbud to adjust the clock frequency thereof according to the target frequency adjustment value;
perform the rapid phase compensation processing on the clock frequency of the slave earbud according to the second phase difference when the phase divergence condition is not satisfied and the second phase difference is greater than the preset threshold value.

In the third aspect of the present application, Bluetooth earbuds are provided, which may include a master earbud and a slave earbud, the slave earbud may include a processor and a memory storing a computer program. The processor, when executing the computer program, may implement the method in any of the above-mentioned embodiments.

In the fourth aspect of the present application, a computer-readable storage medium is provided, on which a computer program is stored. The computer program, when executed by a processor, may cause the processor to implement the method in any of the above-mentioned embodiments.

In the fifth aspect of the present application, a computer program product is provided, which may include a computer program. The computer program, when executed by a processor, may cause the processor to implement the method in any of the above-mentioned embodiments.

The above-mentioned frequency adjustment method and apparatus, Bluetooth earbuds, storage medium, and program product can be applied to a slave earbud of the earbuds including a master earbud and the slave earbud. The slave earbud can receive signaling packets periodically transmitted by the master earbud, each signaling packet includes a target sample point identifier and a Bluetooth clock of the master earbud corresponding to the target sample point identifier, a Bluetooth clock of the slave earbud corresponding to the target sample point identifier can be acquired according to the target sample point identifier, a difference between the Bluetooth clock of the master earbud and the Bluetooth clock of the slave earbud is calculated as a first phase difference, the first phase difference between the Bluetooth clock of the slave earbud and the Bluetooth clock of the master earbud is determined, a rapid phase compensation processing is performed on a clock frequency of the slave earbud according to the first phase difference when the first phase difference satisfies a phase compensation condition, a second phase difference between the Bluetooth clock of the slave earbud and the Bluetooth clock of the master earbud is determined after the clock frequency of the slave earbud is adjusted, the clock frequency of the slave earbud is re-adjusted according to the first phase difference and the second phase difference. In such a manner, it is possible to determine that the play of the master earbud and the slave earbud is not synchronized when the first phase difference is determined to satisfy the phase compensation condition, and the clock frequencies of the master earbud and the slave earbud are substantially synchronized by performing the rapid phase compensation processing on the clock frequency of the slave earbud, thereby implementing the phase compensation for the slave earbud. Accordingly, the relative phase between the master earbud and the slave earbud is rapidly reduced and the play frequency is rapidly tracked. Taking into account that there is always a deviation between the crystal oscillator frequencies of the master earbud and the slave earbud, the second phase difference is continuously determined after the clock frequency of the slave earbud is adjusted based on the first phase difference, and the clock frequency of the slave earbud is re-adjusted according to the first phase difference and the second phase difference, so that the clock frequencies of the master earbud and the slave earbud can be accurately synchronized, thereby avoiding the auditory perceptible play asynchrony for the user when the master and slave earbuds play the audio, and ensuring the synchronization of the audio play of the master and slave earbuds.

### BRIEF DESCRIPTION OF THE DRAWINGS

In order to describe the technical solution in the embodiments of the present invention or the related technologies more clearly, the accompanying drawings required for describing the embodiments of the present invention or the related technologies are briefly introduced below. Obviously, the accompanying drawings in the following description show merely some embodiments of the present invention, and those skilled in the art may still obtain other related drawings according to these disclosed accompanying drawings without any creative efforts.
FIG. 1 is an application environment diagram for a frequency adjustment method according to an embodiment.
FIG. 2 is a flow chart showing a frequency adjustment method according to an embodiment.
FIG. 3 is a flow chart of adjusting a clock frequency according to an embodiment.
FIG. 4 is a flow chart of determining a first time adjustment interval according to an embodiment.
FIG. 5 is a flow chart of adjusting a clock frequency according to another embodiment.
FIG. 6 is a flow chart of determining a target frequency adjustment value according to an embodiment.
FIG. 7 is a flow chart of re-adjustment processing according to an embodiment.
FIG. 8 is a flow chart of frequency synchronization between dual earbuds according to an embodiment.
FIG. 9 is a schematic diagram of frequency alignment according to an embodiment.
FIG. 10 is a schematic diagram illustrating an adjustment effect of a phase difference between dual earbuds according to an embodiment.
FIG. 11 is a structure diagram illustrating a frequency adjustment apparatus according to an embodiment.
FIG. 12 is an internal structure diagram of a computer device according to an embodiment.

### DETAILED DESCRIPTION OF THE EMBODIMENTS

The technical solution in the embodiments of the present invention will be clearly and completely described below in conjunction with the drawings in the embodiments of the present invention. Obviously, the described embodiments are only part of the embodiments of the present invention, rather than all of the embodiments. All other embodiments obtained by ordinary technicians in the art based on these embodiments in the present invention without any creative effort shall fall within the scope of protection of the present application. It should be appreciated that the specific embodiments described herein are only used for explaining the present application, rather than limiting the present application.

Bluetooth earbuds are commonly used electronic devices, and generally include two earbuds, i.e., a master earbud and a slave earbud.

In a Bluetooth dual earbud transmission mode, a relative phase of the audio play between the master earbud and the slave earbud needs to satisfy a certain index requirement, otherwise, the relative phase may cause auditory perceptible play asynchrony. However, since there exists a natural deviation between clock crystal oscillator frequencies of the master earbud and the slave earbud, a relative phase difference is inevitably larger over time. Accordingly, the problem of play asynchrony between the master earbud and the slave earbud of the Bluetooth earbuds needs to be solved urgently.

In view of this, in an embodiment of the present invention, a frequency adjustment method is provided, which is applied to Bluetooth earbuds to solve the problem of play asynchrony between the master earbud and the slave earbud in the Bluetooth earbuds.

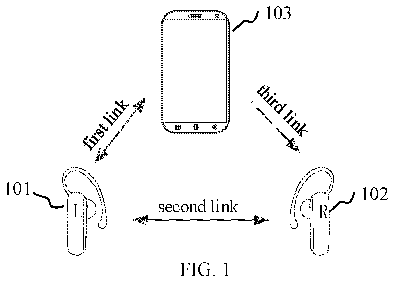

The frequency adjustment method provided in the embodiment of the present invention can be applied in an application environment shown in FIG. 1. The Bluetooth earbuds include a master earbud 101 and a slave earbud 102. When the Bluetooth earbuds are in use, the master earbud 101 is connected to a terminal 103 to establish a first link to transmit audio data, control data, etc. The master earbud 101 is connected to the slave earbud 102 to establish a second link to implement information interaction between the dual earbuds, such as the transmission of signaling packets, etc. The slave earbud 102 is connected to the terminal 103 to establish a third link to transmit audio data, control data, etc. It should be noted that the master earbud and the slave earbud in the embodiments of the present invention are relative concepts. The Bluetooth earbuds include two earbuds. The master earbud 101 may be one of the two earbuds, and the slave earbud 102 may be the other of the two earbuds, which is not specifically limited by the embodiments of the present invention. The terminal 103 may be, but is not limited to, any of electronic devices that can establish a connection with the Bluetooth earbuds, such as a personal computer, a laptop, a smart phone, a tablet computer, an Internet of Things device, and a portable wearable device, etc. The Internet of Things device may be a smart speaker, a smart TV, a smart air conditioner, a smart car-mounted device, etc., and the portable wearable device may be a smart watch, a smart bracelet, a head-mounted device, etc., which is not specifically limited by the embodiments of the present invention.

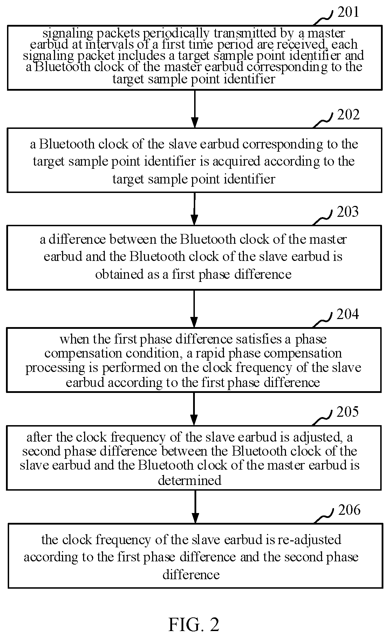

In an embodiment, as shown in FIG. 2, a frequency adjustment method is provided, which is applied to the slave earbud 102 shown in FIG. 1 as an example for illustration. The method may include the following steps.

Step 201: signaling packets periodically transmitted by a master earbud at intervals of a first time period are received, where each signaling packet includes a target sample point identifier and a Bluetooth clock of the master earbud corresponding to the target sample point identifier.

In order to achieve synchronous following, the master earbud needs to transmit play synchronization information to the slave earbud. Accordingly, the master earbud may periodically transmit a signaling packet including a target sample point identifier and the Bluetooth clock of the master earbud to the slave earbud. The Bluetooth clock of the master earbud in the signaling packet corresponds to the target sample point identifier. Different sample point data may correspond to different sample point identifiers for marking the sample point data. It should be appreciated that the target sample point identifier is configured to mark the target sample point data.

In such a manner, the slave earbud determines a Bluetooth clock in the slave earbud itself corresponding to the target sample point identifier based on the target sample point identifier, that is, a Bluetooth clock of the slave earbud.

Optionally, a period according to which the master earbud transmits the signaling packet is a first time period, and the first time period can be determined based on Digital-to-Analog Converter (DAC) frequency deviations of audio play from the master earbud and the slave ear. That is, when the DAC frequency deviations of the audio play from the master earbud and the slave earbud are different, under the requirement that a phase difference between the master earbud and the slave earbud does not exceed one sample point, the corresponding periods during which the master earbud transmit the signaling packet are different.

For example, when the DAC frequency deviation between the master earbud and the slave earbud is equal to 1 ppm, the phase deviation between the master earbud and the slave earbud may reach one sample point through accumulation of 22.65 seconds. Then, the first time period according to which the master earbud transmits the signaling packet should be less than 22.65 seconds, for example, 22 seconds. The unit ppm stands for parts per million. When used for representing the frequency deviation, ppm indicates an allowable deviation value at a specific center frequency.

As shown in Table 1, it shows durations for different DAC frequency deviations between the master earbud and the slave earbud to exceed one sample point. Accordingly, based on the corresponding relationship in Table 1, specific values of the first time period can be set to ensure that the phase deviation between the master earbud and the slave earbud does not exceed one sample point.

**Table 1**

| DAC frequency deviation value between master earbud and slave earbud | corresponding duration required for exceeding one sample point |
|---|---|
| 1 ppm | 22.65 sec |
| 5 ppm | 4.53 sec |
| 10 ppm | 3.02 sec |
| 15 ppm | 2.265 sec |
| 20 ppm | 1.812 sec |
| 25 ppm | 1.51 sec |
| 30 ppm | 1.29 sec |
| 35 ppm | 1.13 sec |

Optionally, when the DAC frequency deviation between the master earbud and the slave earbud is less than or equal to 10 ppm, the first time period for the signaling packet interaction between the master earbud and the slave earbud can be set to any value in a range of 1 to 3 seconds.

Step 202: a Bluetooth clock of the slave earbud corresponding to the target sample point identifier is acquired according to the target sample point identifier.

In order to enable the slave earbud to acquire the Bluetooth clock of the slave earbud corresponding to the target sample point identifier, the embodiments of the present invention provide the method for storing a plurality of corresponding relationships between different sample point identifiers and Bluetooth clocks in the master earbud and the slave earbud to ensure that the slave earbud can accurately acquire the corresponding Bluetooth clock of the slave earbud.

In a first optional mode, the master earbud and the slave earbud may store corresponding sample point identifiers and corresponding Bluetooth clocks with the same sampling point period. For example, the master earbud and the slave earbud both store the corresponding Bluetooth clocks with 40,000 sample point data as a period, that is, the master earbud and the slave earbud store a corresponding relationship between a sample point identifier corresponding to a piece of sample point data and a Bluetooth clock every 40,000 pieces of sample point data.

In a second optional mode, the master earbud and the slave earbud may store corresponding sample point identifiers with the same Bluetooth clock period. For example, the master earbud and the slave earbud both store the corresponding sample point identifiers with a period of 1 second, that is, an interval between the Bluetooth clock 1 corresponding to the sample point identifier 1 and the Bluetooth clock 2 corresponding to the sample point identifier 2 is equal to 1 second. Optionally, the Bluetooth clock period may also be other values, which are not specifically limited here.

In a third optional mode, the master earbud and the slave earbud respectively store Bluetooth clocks corresponding to different sample point identifiers. In such a manner, after the slave earbud receives the signaling packet, if the sample point identifier corresponding to the currently played sample point data is different from the sample point identifier in the signaling packet transmitted by the master earbud, the slave earbud needs to perform a conversion to determine the Bluetooth clock of the slave earbud corresponding to the same sample point identifier.

For example, at time t1 before the master earbud transmits the signaling packet, the master earbud reads the sample point identifier corresponding to the currently played sample point data and the Bluetooth clock of the master earbud, and records the Bluetooth clock of the master earbud as PD(N)_master, where N represents the sample point identifier corresponding to the sample point data currently played by the master earbud. The slave earbud receives the signaling packet at time t2, at which time the slave earbud reads the sample point identifier corresponding to the sample point data currently played by itself and the corresponding Bluetooth clock of the slave earbud, and records the Bluetooth clock of the slave earbud as PD(M)_slave, where M is the sample point identifier corresponding to the sample point data currently played by the slave earbud. In such a manner, the slave earbud can obtain the Bluetooth clock of the master earbud corresponding to the sample point identifier M by calculation as follows: PD(M)_master = PD(N)_master + (M-N)/SR.

At this time, since PD(M)_master and PD(M)_slave are both Bluetooth clocks corresponding to the sample point identifier M, the phase difference between the master earbud and the slave earbud can be calculated based on the PD(M)_master and PD(M)_slave, such as a first phase difference mentioned below.

Optionally, the slave earbud may also calculate the Bluetooth clock PD(N)_slave of the slave earbud corresponding to the sample point identifier N based on a difference value between M and N, SR and PD(N)_master, and calculate the phase difference between the master earbud and the slave earbud based on the PD(N)_master and PD(N)_slave.

The SR refers to an audio DAC sampling rate, and the value of SR can be transmitted by the terminal to the slave earbud through the third link.

Step 203: a difference between the Bluetooth clock of the master earbud and the Bluetooth clock of the slave earbud is obtained as a first phase difference.

In the process of establishing a Bluetooth connection between the Bluetooth earbuds and the terminal to play audio data, the terminal may transmit the audio data to be played to the master earbud and the slave earbud respectively. Optionally, the master earbud may transmit synchronous start play information to the slave earbud so that both master and slave earbuds may play the audio data at the same time.

The master earbud and the slave earbud play the audio data based on respective crystal oscillator components. In the play process, due to different frequencies of the respective crystal oscillator components, clock frequencies of the master earbud and the slave earbud are different from each other when playing the audio data. As time accumulates, the relative phase between the master earbud and the slave earbud continues to accumulate, which may cause the master earbud and the slave earbud to be unable to play the audio data synchronously. Accordingly, it is required to determine the phase difference between the master earbud and the slave earbud, that is, the first phase difference, and determine whether a clock frequency difference between the master earbud and the slave earbud is large based on the first phase difference, in order to further adjust the clock frequency.

The master earbud and the slave earbud may divide the audio data to be played into a plurality of pieces of sample point data, each piece of sample point data corresponds to a different Bluetooth clock, that is, the pieces of sample point data are played at moments corresponding to different Bluetooth clocks. Accordingly, the master earbud can acquire a Bluetooth clock corresponding to target sample point data from the master earbud itself and transmit the Bluetooth clock to the slave earbud. In such a manner, the slave earbud can acquire the Bluetooth clock corresponding to the target sample point data from the slave earbud itself. Based on the Bluetooth clock of the master earbud and the Bluetooth clock of the slave earbud corresponding to the same target sample point data, the first phase difference can be obtained.

Optionally, the target sample point data may be a Bluetooth clock corresponding to a piece of sample point data currently played by the master earbud, or a Bluetooth clock corresponding to any piece of sample point data in the master earbud, which is not specifically limited here.

After the Bluetooth clock of the master earbud and the Bluetooth clock of the slave earbud corresponding to the target sample point identifier, the slave earbud may obtain a difference between the Bluetooth clock of the master earbud and the Bluetooth clock of the slave earbud as the first phase difference.

It can be appreciated that, optionally, the first phase difference can be obtained by subtracting the Bluetooth clock of the slave earbud from the Bluetooth clock of the master earbud. In this case, if the first phase difference is greater than zero, it means that the Bluetooth clock of the master earbud is earlier than the Bluetooth clock of the slave earbud. If the first phase difference is less than zero, it means that the Bluetooth clock of the master earbud is later than the Bluetooth clock of the slave earbud.

Alternatively, the first phase difference may be obtained by subtracting the Bluetooth clock of the master earbud from the Bluetooth clock of the slave earbud. In this case, if the first phase difference is greater than zero, it means that the Bluetooth clock of the master earbud is later than the Bluetooth clock of the slave earbud. If the first phase difference is less than zero, it means that the Bluetooth clock of the master earbud is earlier than the Bluetooth clock of the slave earbud.

Step 204: when the first phase difference satisfies a phase compensation condition, a rapid phase compensation processing is performed on the clock frequency of the slave earbud according to the first phase difference.

Since there is a corresponding relationship between the phase and the clock frequency, whether the first phase difference satisfies the phase compensation condition is determined to determine whether the clock frequency of the slave earbud needs to be adjusted in order to reduce a difference between clock frequencies of the master earbud and the slave earbud. Correspondingly, the relative phase difference between the master earbud and the slave earbud may also be reduced by adjusting the clock frequency of the slave earbud.

In an embodiment of the present invention, whether the clock frequency of the slave earbud needs to be adjusted is determined by detecting whether the first phase difference satisfies the phase compensation condition. The phase compensation condition includes that the first phase difference is greater than or equal to a preset threshold value. In other words, the method may further include: it is detected whether the first phase difference is greater than or equal to the preset threshold value after the first phase difference is determined; it is determined that the first phase difference satisfies the phase compensation condition when the first phase difference is greater than or equal to the preset threshold value.

When the first phase difference is greater than or equal to the preset threshold value, the relative phase difference between the master earbud and the slave earbud is large, and the clock frequency of the slave earbud needs to be adjusted to ensure synchronous play of the two earbuds. Accordingly, the slave earbud may adjust its own clock frequency according to the first phase difference to implement the phase compensation. It should be noted that the first phase difference may be represented as an absolute value of the difference between the Bluetooth clock of the master earbud and the Bluetooth clock of the slave earbud. In such a manner, the preset threshold value may be a value greater than zero, in order to rapidly determine whether the first phase difference between the master earbud and the slave earbud satisfies the phase compensation condition. It should be noted that the preset threshold value may be determined according to actual conditions, which is not specifically limited here.

Step 205: after the clock frequency of the slave earbud is adjusted, a second phase difference between the Bluetooth clock of the slave earbud and the Bluetooth clock of the master earbud is determined.

After the clock frequency of the slave earbud is adjusted according to the first phase difference, the relative phase difference between the master earbud and the slave earbud is reduced, and substantial synchronization can be implemented between the master earbud and the slave earbud. However, as mentioned above, there exists a natural deviation between crystal oscillator frequencies of the master earbud and the slave earbud. Accordingly, after the clock frequency of the slave earbud is adjusted according to the first phase difference, the clock frequency of the slave earbud needs to be adjusted once again based on the second phase difference in order to ensure more accurate synchronization between the master earbud and the slave earbud.

Optionally, the master earbud may periodically transmit Bluetooth clocks corresponding to different pieces of sample point data to the slave earbud. Accordingly, after the clock frequency of the slave earbud is adjusted, the slave earbud may determine the second phase difference based on a Bluetooth clock of the master earbud corresponding to another piece of target sample point data latest received from the master earbud and a Bluetooth clock of the slave earbud corresponding to the another piece of target sample point data, to adjust the clock frequency once again based on the first phase difference and the second phase difference.

Step 206: the clock frequency of the slave earbud is re-adjusted according to the first phase difference and the second phase difference.

The slave earbud may determine a frequency deviation according to a difference value between the first phase difference and the second phase difference, and adjust the clock frequency of the slave earbud once again based on the frequency deviation according to a relationship between the frequency deviation and a preset adjustment step, or adjust the clock frequency of the slave earbud once again based on a preset minimum frequency adjustment step, to ensure the precise synchronization of the frequencies of the two earbuds.

In the above-mentioned frequency adjustment method, the first phase difference between the Bluetooth clock of the slave earbud and the Bluetooth clock of the master earbud is determined, and the rapid phase compensation processing is performed on the clock frequency of the slave earbud according to the first phase difference when the first phase difference satisfies the phase compensation condition. After the clock frequency of the slave earbud is adjusted, the second phase difference between the Bluetooth clock of the slave earbud and the Bluetooth clock of the master earbud is determined once again, and the clock frequency of the slave earbud is adjusted once again according to the first phase difference and the second phase difference. In such a manner, it is possible to determine that the play of the master earbud and the slave earbud is not synchronized when it is determined that the first phase difference satisfies the phase compensation condition, and the clock frequency of the slave earbud is adjusted so that the clock frequencies of the master earbud and the slave earbud are substantially synchronized, thereby implementing the phase compensation for the slave earbud. Accordingly, the relative phase between the master earbud and the slave earbud is rapidly reduced and the play frequency is rapidly tracked. Taking into account that there is always a deviation between the crystal oscillator frequencies of the master earbud and the slave earbud, the second phase difference is determined after the clock frequency of the slave earbud is adjusted based on the first phase difference, and the clock frequency of the slave earbud is re-adjusted according to the first phase difference and the second phase difference, so that the clock frequencies of the master earbud and the slave earbud can be accurately synchronized, thereby avoiding the auditory perceptible play asynchrony for the user when the master and slave earbuds play the audio, and ensuring the synchronization of the audio play of the master and slave earbuds.

In the embodiment of the present invention, the master earbud periodically transmits signaling packets to the slave earbud, so that the slave earbud can calculate the first phase difference between the clock frequencies of the master and slave earbuds based on the signaling packets to determine whether the clock frequency of the slave earbud needs to be adjusted, thereby ensuring the frequency synchronization between the master and slave earbuds and implementing the phase compensation timely. Since the phase deviation corresponding to the period according to which the master earbud transmits the signaling packet does not exceed one sample point, the relative phase difference between the master and slave earbuds can be kept no more than one audio sample point while rapid reduction of the relative phase between the dual earbuds and rapid tracking of the clock frequencies of the dual earbuds are implemented. In this case, there is no user-perceptible asynchrony between the master earbud and the slave earbud, and the normal use of the Bluetooth earbuds is guaranteed.

In the embodiment of the present invention, when the first phase difference satisfies the phase compensation condition, the clock frequency of the slave earbud is adjusted according to the first phase difference, that is, the absolute value of the relative phase difference between the master earbud and the slave earbud is calculated in the signaling packet interaction process between the master and slave earbuds. When the absolute value of the relative phase difference is greater than or equal to the preset threshold value, the rapid phase compensation is performed on the slave earbud to reduce the relative phase difference between the master and slave earbuds. The process of rapid phase compensation may include that the clock frequency of the slave earbud is directly adjusted by using one frequency adjustment value within the next time interval Δt, and complete compensation for the phase of the slave earbud is implemented, so that the relative phase difference between the dual earbuds is reduced as rapidly as possible. The process of adjusting the clock frequency of the slave earbud according to the first phase difference will be elaborated below.

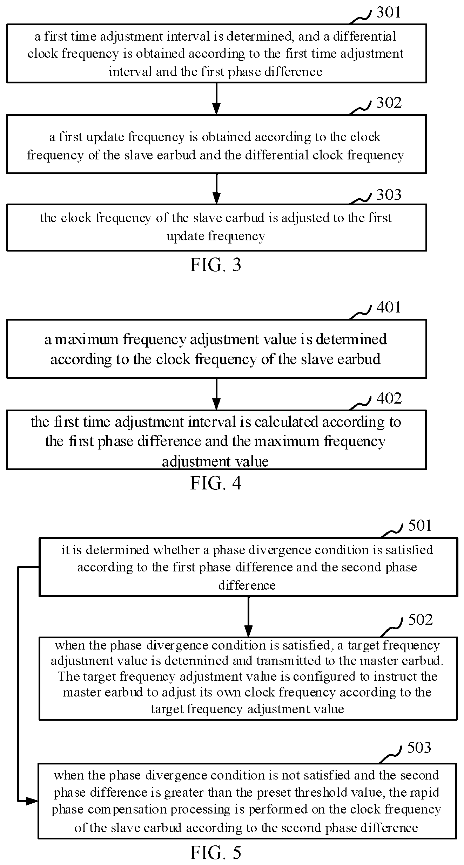

Referring to FIG. 3, which shows a flow chart of adjusting a clock frequency according to an embodiment of the present invention, the step of performing the rapid phase compensation processing on the clock frequency of the slave earbud according to the first phase difference may include the following steps.

Step 301: a first time adjustment interval is determined, and a clock frequency difference is obtained according to the first time adjustment interval and the first phase difference.

The first time adjustment interval refers to a time interval according to which the slave earbud adjusts its clock frequency to the first update frequency, that is, the time interval Δt mentioned above.

In an optional embodiment of the present invention, as shown in FIG. 4, it is a flow chart of determining a first time adjustment interval. The step of determining the first adjustment interval may include the following steps.

Step 401: a maximum frequency adjustment value is determined according to the clock frequency of the slave earbud.

Step 402: the first time adjustment interval is calculated according to the first phase difference and the maximum frequency adjustment value.

The clock frequency of the slave earbud refers to a current clock frequency of the slave earbud needing to be adjusted. Optionally, a maximum offset value of the clock frequency of the slave earbud that can be adjusted is determined in real time according to the current clock frequency of the slave earbud, and the maximum offset value can serve as the maximum frequency adjustment value Δfₘₐₓ. Optionally, the maximum offset value may also be preset in the slave earbud and is taken as the maximum frequency adjustment value.

Accordingly, based on the relationship between the clock frequency and the phase, it can be known that: θ₀=Δfₘₐₓ * Δt, where θ₀ represents the first phase difference, and Δt represents the first time adjustment interval. Correspondingly, the first time adjustment interval Δt satisfies Δt=θ₀/Δfₘₐₓ, that is, the value of the first time adjustment interval can be obtained by dividing the first phase difference by the maximum frequency adjustment value.

In another optional embodiment of the present invention, the step of determining the first time adjustment interval may include that a preset adjustment interval is determined as the first time adjustment interval, or the first time period is determined as the first time adjustment interval.

The preset adjustment interval may be a fixed adjustment interval value preset in the slave earbud, and the slave earbud may also directly determine the preset adjustment interval as the first time adjustment interval to improve the calculation efficiency. Alternatively, the slave earbud may directly determine the first time period as the first time adjustment interval. For example, after receiving a first signaling packet, the slave earbud may receive a second signaling packet after the first time period. When the first signaling packet is received, the first phase difference and the first update frequency are directly determined based on the first signaling packet, so that the clock frequency of the slave earbud can be adjusted before the second signaling packet is received, that is, within the first time period.

In another optional embodiment of the present invention, at time t1, the master earbud transmits a signaling packet including the Bluetooth clock p1 of the master earbud corresponding to the target sample point identifier to the slave earbud, and the slave earbud determines the Bluetooth clock of the slave earbud corresponding to the target sample point identifier as q1. After receiving the signaling packet transmitted by the master earbud, the slave earbud can calculate the first phase difference θ₀, for example, θ₀=q1-p1. The time when the next piece of sample point data adjacent to the piece of sample point data corresponding to the target sample point identifier is played by the slave earbud is denoted as t2, and then, optionally, the first time adjustment interval Δt may be equal to t2-t1. Optionally, the first time adjustment interval Δt may be approximately equal to a value of t2-t1, which is not specifically limited herein.

Step 302: a first update frequency is obtained according to the clock frequency of the slave earbud and the clock frequency difference.

Furthermore, a target of the rapid phase compensation is to complete the compensation of the first phase difference θ₀ within the first time adjustment interval Δt1, that is, ΔF*Δt1 =θ₀. Based on this, the clock frequency difference ΔF can be obtained according to the first time adjustment interval and the first phase difference, that is, ΔF=θ₀/Δt1. The unit of the clock frequency difference ΔF is ppm.

Step 303: the clock frequency of the slave earbud is adjusted to the first update frequency.

The clock frequency of the slave earbud refers to a current clock frequency F of the slave earbud needing to be adjusted, so that the first update frequency F_new can be obtained by subtracting the clock frequency difference from the current clock frequency of the slave earbud needing to be adjusted, that is, F_new = F-ΔF. Further, the phase compensation is implemented by adjusting the clock frequency F of the slave earbud to F_new.

In an optional embodiment of the present invention, the clock frequency of the slave earbud may be adjusted, or the DAC frequency of the slave earbud may be adjusted, or other clock crystal oscillator frequencies of the slave earbud may be adjusted, for example, the crystal oscillator frequency of 48MHz.

If the DAC frequency is adjusted, F represents a current DAC sampling frequency of the slave earbud, and the clock frequency difference is represented as ΔF' which is obtained by converting ΔF through the DAC sampling frequency. For example, the DAC sampling frequency is equal to 44.1kHz, ΔF'=ΔF*44.1KHz. In another example, if the crystal oscillator frequency of 48MHz is adjusted, ΔF'=ΔF*48 MHz.

For ease of understanding, a specific example is provided below for illustration, which is not intended to limit the present application.

Assuming that the Bluetooth clock precision is 0.25µs, the Bluetooth clock of the master earbud corresponding to the target sample point identifier in the master earbud at time t1 is p1=1000, and the Bluetooth clock of the slave earbud corresponding to the target sample point identifier in the slave earbud is q1=1100, the first phase difference is equal to 100*0.25µs=25µs.

Δt1=1 second is taken as an example, then ΔF=25µs/1s=25ppm. ΔF'=β*ΔF, where β represents a conversion factor. If the DAC frequency is adjusted, β represents the DAC sampling frequency, for example, β is equal to 44.1 kHz, that is: ΔF'=44.1kHz*25/106=1.1025Hz.

If the current DAC frequency F is equal to 44.1kHz, F_new=F-ΔF'=44.1kHz-1.1025Hz=44.0988975Hz, then the DAC frequency of the slave earbud should be adjusted to 44.0988975Hz.

It should be noted that the above precise calculation is only used as an example. In the embodiments of the present invention, simplified approximate calculations may also be utilized to achieve a balance between computational resources and effects.

It should be noted that if the preset adjustment interval serves as the first time adjustment interval, and the clock frequency difference is calculated based on the first time adjustment interval to further obtain the first update frequency, when the clock frequency of the slave earbud is adjusted according to the obtained first update frequency, the clock frequency of the slave earbud cannot be adjusted to align with the clock frequency of the master earbud at one time, then the phase difference between the clock frequency of the master earbud and the clock frequency of the slave earbud obtained in the next calculation still satisfies the phase compensation condition. Accordingly, the new first update frequency can be determined next time to continue to adjust the current clock frequency of the slave earbud, so that the clock frequencies of the master earbud and the slave earbud are aligned to implement the substantial play synchronization.

In the embodiment of the present invention, the clock frequency difference is obtained according to the first time adjustment interval and the first phase difference, the first update frequency is obtained according to the clock frequency of the slave earbud and the clock frequency difference, and the clock frequency of the slave earbud is adjusted to the first update frequency. In such a manner, the clock frequency of the slave earbud can be adjusted to the first update frequency within the first time adjustment interval, and phase alignment and synchronous play can be implemented when the master earbud and the slave earbud play the sample point data after the first time adjustment interval.

In an embodiment, the method may further include: when the first time adjustment interval is greater than the first time period, the latest phase difference between the master earbud and the slave earbud is not calculated under a condition that a signaling packet is received within the first time adjustment interval, and the latest phase difference between the master earbud and the slave earbud is calculated under a condition that a signaling packet is received outside the first time adjustment interval.

Every time the slave earbud receives a signaling packet transmitted by the master earbud, the slave earbud can determine the corresponding Bluetooth clock of the slave earbud according to the target sample point identifier in the signaling packet, and further calculate the current phase difference between the master earbud and the slave earbud based on the Bluetooth clock of the master earbud and the Bluetooth clock of the slave earbud. However, the slave earbud needs to perform the above-mentioned clock frequency adjustment before the next signaling packet is received, that is, within the first time adjustment interval. Before the clock frequency adjustment is completed, there is no need to calculate the latest phase difference between the master and slave earbuds. Based on this, in an embodiment of the present invention, in order to reduce useless processing and reduce the calculation complexity of the slave earbud, if the above-mentioned first time adjustment interval is greater than the first time period, the slave earbud may receive the latest signaling packet before the clock frequency adjustment is completed. In this case, the slave earbud does not calculate the latest phase difference between the master earbud and the slave earbud under a condition that the signaling packet is received within the first time adjustment interval. Instead, the slave earbud calculates the latest phase difference between the master earbud and the slave earbud under a condition that the clock frequency adjustment is completed, that is, the signaling packet is received outside the first time adjustment interval, and determines the next adjustment processing plan according to the latest calculated phase difference.

Optionally, when the absolute value of the relative phase difference between the dual earbuds is reduced to be less than the preset threshold value, in an embodiment of the present invention, a frequency synchronization method can be further adopted to implement precise alignment of the clock frequencies of the master and slave earbuds.

During rapid phase compensation, in a possible situation, the clock frequency of the master earbud is within an adjustable range of the clock frequency of the slave earbud, that is, the slave earbud can synchronize with the clock frequency of the master earbud by adjusting its own clock frequency to the first update frequency. In another possible situation, the clock frequency of the master earbud is outside the adjustable range of the clock frequency of the slave earbud, that is, the slave earbud still cannot synchronize with the clock frequency of the master earbud after adjusting its own clock frequency to the first update frequency, and the phase difference between the master and slave earbuds is still greater than the preset threshold value.

For the latter situation, in an embodiment of the present invention, the slave earbud transmits a target frequency adjustment value to the master earbud, to allow the master earbud to actively adjust its own clock frequency to achieve synchronization between the master and slave earbuds. The process is described below.

FIG. 5 shows a flow chart of adjusting a clock frequency according to an embodiment of the present invention. The method may further include the following steps.

Step 501: it is determined whether a phase divergence condition is satisfied according to the first phase difference and the second phase difference.

The phase divergence condition includes that a product of the first phase difference and the second phase difference is greater than zero and an absolute value of the first phase difference is greater than an absolute value of the second phase difference.

The second phase difference is obtained according to the Bluetooth clock of the master earbud and the Bluetooth clock of the slave earbud in a signaling packet which is transmitted by the master earbud once again and received by the slave earbud after the slave earbud adjusts its own clock frequency.

If the product of the first phase difference and the second phase difference is greater than zero and the absolute value of the first phase difference is greater than the absolute value of the second phase difference, the phase divergence condition is satisfied, which means that the play time of the slave earbud is not synchronized with the play time of the master ear at time t1 corresponding to the first phase difference, and the absolute value of the first phase difference is greater than zero. After the rapid phase compensation, the play time of the slave earbud is still not synchronized with the play time of the master earbud at time t2 corresponding to the second phase difference, and the absolute value of the second phase difference is greater than zero. In addition, in possible situations, the absolute value of the second phase difference is greater than the absolute value of the first phase difference, and both are greater than zero. This means that the slave earbud cannot align with the clock frequency of the master earbud by adjusting its own clock frequency. In this case, the slave earbud can notify the master earbud to adjust its own clock frequency through a signaling interaction.

Step 502: when the phase divergence condition is satisfied, a target frequency adjustment value is determined and transmitted to the master earbud. The target frequency adjustment value is configured to instruct the master earbud to adjust its own clock frequency according to the target frequency adjustment value.

Specifically, if the phase divergence condition is satisfied, the slave earbud needs to determine a target frequency adjustment value and transmit the target frequency adjustment value to the master earbud, to allow the master earbud to adjust its own clock frequency according to the target frequency adjustment value. Optionally, the slave earbud may transmit a signaling packet including the target frequency adjustment value to the master earbud to implement the transmission of the target frequency adjustment value.

In an optional embodiment of the present invention, a fixed frequency step may be defined based on test data, and the fixed frequency step may be transmitted to the master earbud as a target frequency adjustment value. For the master earbud, if the Bluetooth clock of the master earbud is earlier than the Bluetooth clock of the slave earbud, the master earbud determines a target update frequency value according to a difference between the target frequency adjustment value and a current clock frequency of the master earbud, and adjusts its own current Bluetooth clock to the target update frequency value. Correspondingly, if the Bluetooth clock of the master earbud is later than the Bluetooth clock of the slave earbud, the master earbud determines the target update frequency value according to a sum of the target frequency adjustment value and a current clock frequency of the master earbud itself, and adjusts its own current Bluetooth clock to the target update frequency value.

In another optional embodiment of the present invention, the slave earbud may determine the target frequency adjustment value from a plurality of frequency steps based on the first phase difference and the second phase difference. The details are provided as follows.

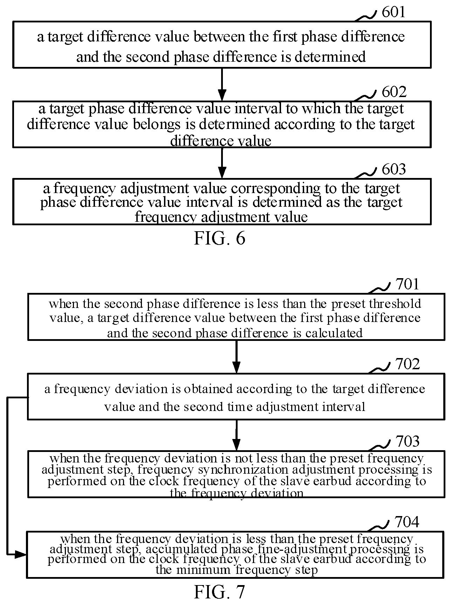

Referring to FIG. 6, it shows a flow chart of determining a target frequency adjustment value according to an embodiment of the present invention. The step of determining the target frequency adjustment value may include:
step 601: a target difference value between the first phase difference and the second phase difference is determined;
step 602: a target phase difference value interval to which the target difference value belongs is determined according to the target difference value;
step 603: a frequency adjustment value corresponding to the target phase difference value interval is determined as the target frequency adjustment value.

The target difference value refers to an absolute value of the difference between the first phase difference and the second phase difference. A plurality of corresponding relationships between phase difference value intervals and frequency adjustment values are stored in the earbud. The target difference value should belong to a target difference value interval in the plurality of phase difference value intervals. Accordingly, the frequency adjustment value corresponding to the target difference value interval can be transmitted to the master earbud as the target frequency adjustment value.

Optionally, the slave earbud may store a plurality of corresponding relationships between phase difference values and frequency adjustment values, and the slave earbud may determine a frequency adjustment value corresponding to a phase difference value equal to the target difference value as the target frequency adjustment value. Table 2 shows the corresponding relationships between the phase difference values and frequency adjustments values, where the values of F_step_1 to F_step_n are monotonically increasing or monotonically decreasing.

**Table 2**

| Phase difference value | Frequency adjustment value |
|---|---|
| θ_thre_1 | +/-F_step_1 |
| θ_thre_2 | +/-F_step_2 |
| ... | ... |
| θ_thre_n | +/-F_step_n |

It should be noted that, when the target frequency adjustment value is determined based on Table 2, as mentioned above, the first phase difference θ₀ and the second phase difference θ₁ have the same sign, that is, the product of the first phase difference θ₀ and the second phase difference θ₁ is greater than zero. Furthermore, if the Bluetooth clock of the master earbud is earlier than the Bluetooth clock of the slave earbud, the negative frequency adjustment value in Table 2 serves as the target frequency adjustment value, so that the master earbud reduces its own clock frequency based on the target frequency adjustment value. If the Bluetooth clock of the master earbud is later than the Bluetooth clock of the slave earbud, the positive frequency adjustment value in Table 2 serves as the target frequency adjustment value, so that the master earbud increases its own clock frequency based on the target frequency adjustment value, in order to implement the alignment between the clock frequencies of the master and slave earbuds. In other words, if θ₁>θ₀>0, the sign of the frequency adjustment value in Table 2 is "-". If θ₁<θ₀<0, the sign of the frequency adjustment value in Table 2 is "+". If θ₁=θ₀, the sign of the frequency adjustment value in Table 2 is "-" in the condition of θ₁>0, and the sign of the frequency adjustment value in Table 2 is "+" in the condition of θ1<0.

Step 503: when the phase divergence condition is not satisfied and the second phase difference is greater than the preset threshold value, the rapid phase compensation processing is performed on the clock frequency of the slave earbud according to the second phase difference.

The process of performing the rapid phase compensation processing on the clock frequency of the slave earbud according to the second phase difference is consistent with the process of performing the rapid phase compensation processing on the clock frequency of the slave earbud according to the first phase difference mentioned above, that is, a new first time adjustment interval can be determined, and a new clock frequency difference can be obtained according to the new first time adjustment interval and the second phase difference. A new first update frequency can be obtained according to the clock frequency of the slave earbud and the new clock frequency difference. The clock frequency of the slave earbud is adjusted to the new first update frequency. The new first time adjustment interval is a time interval in which the slave earbud adjusts its own clock frequency to the new first update frequency. Accordingly, as for the process of determining the new first time adjustment interval, reference can be made to the process of determining the first time adjustment interval mentioned above.

In addition, after the rapid phase compensation processing is performed on the clock frequency of the slave earbud according to the second phase difference, if a third phase difference between the master earbud and the slave earbud is detected to be less than the preset threshold value, the clock frequency of the slave earbud is adjusted once again according to the second phase difference and the third phase difference. The adjustment processing may be a frequency synchronization adjustment processing of the clock frequency of the slave earbud according to the frequency deviation, or adjustment processing of the clock frequency of the slave earbud according to the minimum frequency step.

In the embodiment of the present invention, the target difference value between the first phase difference and the second phase difference is determined, the target phase difference value interval to which the target difference value belongs is determined according to the target difference value, the slave earbud determines the frequency adjustment value corresponding to the target phase difference value interval as the target frequency adjustment value, thereby determining the target frequency adjustment value from a plurality of frequency adjustment values which is more in line with the current frequency difference between the master earbud and the slave earbud, and adjusting the clock frequency of the master earbud based on the target frequency adjustment value. Accordingly, the accuracy and reliability of the adjustment are improved, and rapid reduction of the relative phase between the dual earbuds and rapid tracking of the play frequencies of the dual earbuds are implemented.

Based on the above, the slave earbud adjusts its own clock frequency according to the first phase difference or the master earbud adjusts its own clock frequency according to the target frequency adjustment value, so that the relative phase difference between the master earbud and the slave earbud can be reduced to be less than the preset threshold value, that is, the phases of the master and slave earbuds are substantially aligned. On this basis, in order to ensure the precise alignment and synchronization between the phases of the master and slave earbuds, the frequency synchronization adjustment can be continuously performed on the slave earbud, that is, the clock frequency of the slave earbud is adjusted once again. The process of adjusting the clock frequency of the slave earbud once again is described below.

Refer to FIG. 7, which shows a flow chart of a re-adjustment processing according to an embodiment of the present invention. The step of re-adjusting the clock frequency of the slave earbud according to the first phase difference and the second phase difference may include:
step 701: when the second phase difference is less than the preset threshold value, a target difference value between the first phase difference and the second phase difference is calculated;
step 702: a frequency deviation is obtained according to the target difference value and the second time adjustment interval;
step 703: when the frequency deviation is not less than the preset frequency adjustment step, frequency synchronization adjustment processing is performed on the clock frequency of the slave earbud according to the frequency deviation.

The second phase difference is less than the preset threshold value, which may mean that an absolute value of the second phase difference is less than the preset threshold value. If the second phase difference is less than the preset threshold value, it means that the relative phase difference between the master earbud and the slave earbud is relatively small after the slave earbud adjusts its own clock frequency or the master earbud adjusts its own clock frequency. In this case, the frequency synchronization adjustment can be further performed.

The second time adjustment interval refers to a time difference between the time corresponding to the second phase difference and the time corresponding to the first phase difference. It should be noted that the second phase difference is a relative concept. After the slave earbud adjusts its own clock frequency based on the first phase difference, the relative phase difference between the master earbud and the slave earbud may be less than the preset threshold value. The second phase difference refers to a second difference value calculated according to the Bluetooth clock transmitted by the master earbud and the corresponding Bluetooth clock of the slave earbud after the clock frequency of the slave earbud is adjusted. If the relative phase difference between the master earbud and the slave earbud is still greater than the preset threshold value after the slave earbud adjusts its own clock frequency based on the first phase difference, the clock frequency of the master earbud needs to be adjusted based on the above-mentioned target frequency adjustment value. The second phase difference refers to the third difference value calculated according to the Bluetooth clock of the master earbud transmitted once again by the master earbud itself and the corresponding Bluetooth clock of the slave earbud after the clock frequency of the master earbud is adjusted.

For example, the slave earbud calculates the first phase difference θ1 at a certain sample point identifier k2 (corresponding to time t2) of the signaling packet interaction after Δt1, at this time, the value of θ1 can be reduced to be less than the preset threshold value. The slave earbud calculates the second phase difference θ2 at the sample point identifier k3 (corresponding to time t3. Then the target difference value satisfies Δθ2=θ2-θ1, where Δθ2 represents the differential of the two phase differences.

Accordingly, the corresponding frequency deviation Δf₂ between the master earbud and the slave earbud satisfies Δf₂=Δθ2/Δt2, where Δt2 is the second time adjustment interval, and Δt2=t3-t2. The unit of Δθ2 may be microsecond ( µ s), the unit of Δt2 may be second (s), and the unit of Δf₂ may be ppm.

Based on the frequency deviation, in an embodiment of the present invention, a preset frequency adjustment step is defined. If the frequency deviation is not less than the preset frequency adjustment step, it means that although the current phase difference between the master earbud and the slave earbud is less than the preset threshold value, the current phase difference between the master earbud and the slave earbud is still greater than a threshold value corresponding to the preset frequency adjustment step, and the clock frequency still needs to be further adjusted.

In an embodiment, the step of performing the frequency synchronization adjustment processing on the clock frequency of the slave earbud according to the frequency deviation may include: a second update frequency is obtained according to the frequency deviation and the clock frequency of the slave earbud, and the clock frequency of the slave earbud is adjusted to the second update frequency within the first time period.

If the slave earbud is later than the master earbud, the second update frequency F_new2 is equal to the current clock frequency F of the slave earbud plus the frequency deviation Δf₂. If the slave earbud is earlier than the master earbud, the second update frequency F_new2 is equal to the current clock frequency F of the slave earbud minus the frequency deviation Δf₂. In the next period of adjustment, the current clock frequency of the slave earbud is adjusted to the second update frequency F_new2, so that the phase difference between the master earbud and the slave earbud can be reduced to be less than the preset frequency adjustment step as soon as possible, thereby implementing the maximum frequency synchronization. The next period of adjustment may be the first time period, so that the clock frequency of the slave earbud can be rapidly adjusted before the next signaling packet is received and the phase difference between the master and slave earbuds is calculated.

Optionally, as mentioned above, if other clock crystal oscillator frequencies are adjusted, the corresponding frequency deviation can be determined according to Δf₂ and the conversion factor, that is, F' is equal to β*Δf₂.

In order to reduce the difficulty of implementation, a minimum step mode can be employed to trigger the adjustment of the clock frequency of the slave earbud. The adjustment is performed when a minimum step requirement is satisfied, otherwise no adjustment is performed. Optionally, the precise calculation in the embodiments of the present invention is only used as an example and may also be a simplified approximate calculation to achieve a balance between computing resources and effects.

Step 704: when the frequency deviation is less than the preset frequency adjustment step, accumulated phase fine-adjustment processing is performed on the clock frequency of the slave earbud according to the minimum frequency step.

If the frequency deviation is less than the preset frequency adjustment step, it means that the current phase difference between the master earbud and the slave earbud is relatively small, and the frequencies of the master and slave earbuds are substantially synchronized. However, considering that the small frequency deviation may cause a large phase difference after a long-term accumulation, the accumulated phase adjustment is continuously performed on the clock frequency of the slave earbud based on the defined minimum frequency step, in order to maintain the maximum precision synchronization between the master and slave earbuds.

In an embodiment, the step of performing the accumulated phase fine-adjustment processing on the clock frequency of the slave earbud according to the minimum frequency step may include: when the Bluetooth clock corresponding to the master earbud is earlier than the Bluetooth clock corresponding to the slave earbud, the clock frequency of the slave earbud is adjusted to a first clock frequency value within the first time period, the first clock frequency value is obtained by increasing the clock frequency of the slave earbud by the minimum frequency step; when the Bluetooth clock corresponding to the master earbud is later than the Bluetooth clock corresponding to the slave earbud, the clock frequency of the slave earbud is adjusted to a second clock frequency value within the first time period, the second clock frequency value is obtained by reducing the clock frequency of the slave earbud by the minimum frequency step.

In the embodiment of the present invention, the minimum frequency step can be defined. When the frequency deviation is less than the preset frequency adjustment step, it can be considered that the frequencies of the master and slave earbuds are substantially consistent. In this case, the clock frequency of the slave earbud can be fine-adjusted according to the current phase difference between the master earbud and the slave earbud.

When the Bluetooth clock corresponding to the master earbud is earlier than the Bluetooth clock corresponding to the slave earbud, the clock frequency of the slave earbud is adjusted to increase by the minimum frequency step, that is, the clock frequency of the slave earbud is adjusted to a sum of the clock frequency of the slave earbud and the minimum frequency step. When the Bluetooth clock corresponding to the master earbud is later than the Bluetooth clock corresponding to the slave earbud, the clock frequency of the slave earbud is adjusted to be reduced by the minimum frequency step, that is, the clock frequency of the slave earbud is adjusted to be a difference value between the clock frequency of the slave earbud and the minimum frequency step.

In the embodiment of the present invention, based on the first phase difference and the second phase difference, the clock frequency of the slave earbud is re-adjusted within the first time period to implement the precise synchronization of audio play between the master earbud and the slave earbud, and a synchronization error may be less than one play sample point. From the perspective of system implementation, this process has better stability, relatively simple processing logic, and excellent implementation effect.

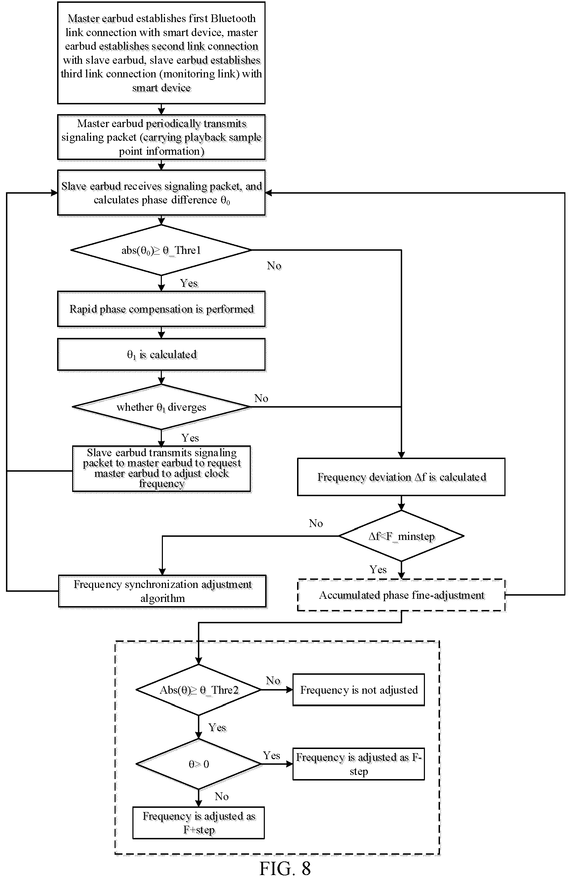

A specific method for synchronizing the frequencies of the dual earbuds is provided below to illustrate the adjustment process for implementing the frequency synchronization between the master earbud and the slave earbud in the embodiment of the present invention. FIG. 8 shows a flow chart of frequency synchronization between the dual earbuds according to an embodiment of the present invention.

First, the master earbud establishes a first Bluetooth link connection with a smart device, the master earbud establishes a second link connection with the slave earbud, and the slave earbud establishes a third link connection (monitoring link) with the smart device. The master earbud periodically transmits a signaling packet carrying play sample point information to the slave earbud. The play sample point information includes a sample point ID and Bluetooth clock information.

After receiving the signaling packet, the slave earbud calculates the phase difference θ₀ between the Bluetooth clock of the master earbud and the Bluetooth clock of the slave earbud corresponding to the same sample point ID, and determines whether the absolute value abs(θ₀) of θ₀ is greater than or equal to the first threshold value θ_Thre1. When the absolute value abs(θ₀) is greater than or equal to the first threshold value θ_Thre1, a rapid phase compensation algorithm is performed, that is, a first update frequency is determined based on the phase difference θ₀, and the current clock frequency of the slave earbud is adjusted to the first update frequency. When the absolute value abs(θ₀) is less than the first threshold value θ_Thre1, the slave earbud continues to receive the signaling packet transmitted by the master earbud, calculates a new phase difference θ₂ between the Bluetooth clock of the master earbud and the Bluetooth clock of the slave earbud, calculates the phase deviation Δθ₂ based on θ₀ and θ₂, and obtains the frequency deviation Δf through the calculation according to the phase deviation.

After the phase compensation algorithm is performed, that is, after the clock frequency of the slave earbud is adjusted, the phase difference θ₁ between the Bluetooth clock of the master earbud and the Bluetooth clock of the slave earbud is re-calculated, and it is determined whether θ₁ converges (that is, whether θ₁ diverges). The method for determining whether θ₁ converges includes: it is determined whether the following two conditions are satisfied simultaneously: (1) θ₀ and θ₁ have the same sign (i.e., θ₀*θ₁>0); (2) θ₁≥θ₀>0 or θ₁≤θ₀<0.

If the above two conditions are satisfied, θ₁ does not converge, that is, θ₁ diverges, which means that the phase difference between the slave earbud with the adjusted clock frequency and the slave earbud is still greater than the first threshold value. The slave earbud transmits a signaling packet including a target frequency adjustment value to the master earbud, so that the master earbud adjusts its own clock frequency according to the target frequency adjustment value. After adjusting its own clock frequency, the master earbud continues to periodically transmit the signaling packet including the sample point ID and the corresponding Bluetooth clock to the slave earbud.

If the above two conditions are not satisfied, θ₁ converges, that is, θ₁ does not diverge, which means that the phase difference between the slave earbud with the adjusted clock frequency and the slave earbud is less than the first threshold value, the signaling packet transmitted by the master earbud continues to be received, the new phase difference θ₂ between the Bluetooth clock of the master earbud and the Bluetooth clock of the slave earbud is calculated, the phase deviation Δθ₂ is calculated based on θ₁ and θ₂, and the frequency deviation Δf is obtained through the calculation according to the phase deviation.

When the phase difference between the master earbud and the slave earbud is less than the first threshold value, the frequency deviation Δf is obtained through the calculation. It is determined whether the frequency deviation Δf is greater than or equal to the minimum frequency step F_minstep. If the frequency deviation Δf is greater than or equal to the minimum frequency step F_minstep, the frequency synchronization adjustment algorithm is performed, that is, the clock frequency of the slave earbud is re-adjusted according to the phase differences θ₀ and θ₂.

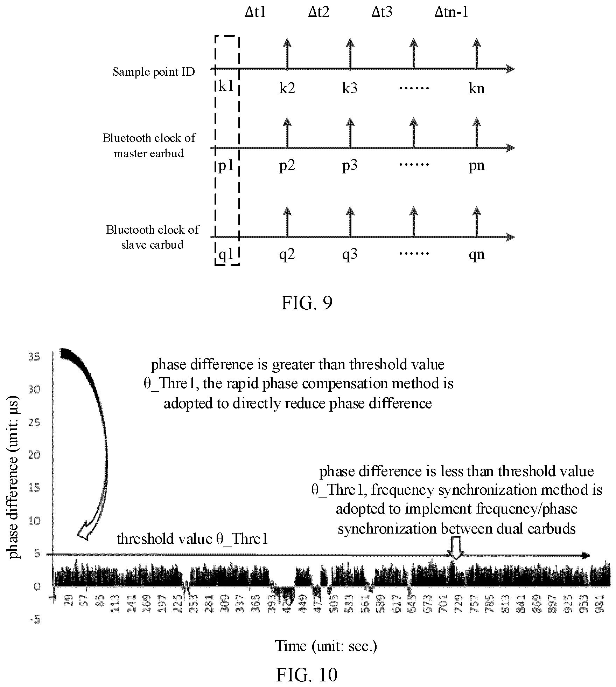

By performing the frequency synchronization adjustment algorithm, the clock frequency of the master earbud can be aligned with the clock frequency of the slave earbud, and the master earbud and the slave earbud can play the sample point data corresponding to the same sample point ID at the same time. For example, referring to FIG. 9, it shows a frequency alignment schematic diagram according to an embodiment of the present invention. Δ t1 to Δtn-1 represent different time intervals, k1 to kn denote sample point IDs corresponding to sample point data, p1 to pn denote Bluetooth clocks of the master earbud corresponding to the sample point IDs, q1 to qn denote Bluetooth clocks of the slave earbud corresponding to the sample point IDs. Accordingly, the sample point k1 corresponds to the Bluetooth clock p1 of the master earbud and the Bluetooth clock q1 of the slave earbud.

In addition, if the frequency deviation Δf is less than the minimum frequency step F_minstep, it is necessary to perform the accumulated phase fine-adjustment operation. For example, if the phase difference θ between the master and slave earbuds is greater than zero (the master earbud is later than the slave earbud), the clock frequency F of the slave earbud is adjusted to decrease by one step. If the phase difference θ between the master and slave earbuds is not greater than zero (the master earbud is earlier than the slave earbud), the clock frequency F of the slave earbud is adjusted to increase by one step.

Optionally, before the clock frequency F of the slave earbud is adjusted to increase or decrease by one step, if it is determined that the phase difference θ between the master and slave earbuds is greater than or equal to the second threshold value θ_Thre2, the clock frequency F of the slave earbud is adjusted to increase or decrease by one step. If it is determined that the phase difference θ between the master and slave earbuds is less than the second threshold value θ_Thre2, no adjustment is performed. It should be noted that, the master earbud periodically transmits the signaling packet to the slave earbud in the process.

Specifically, taking the first threshold value θ_Thre1 as 5µs and a signaling interaction period of the master earbud transmitting the signaling packet as 1 sec as an example, based on the above-mentioned dual earbuds frequency synchronization method, a schematic diagram of an adjustment effect of the phase difference between the dual earbuds as shown in FIG. 10 can be obtained. Accordingly, when an initial phase difference is greater than the first threshold value θ_Thre1, in the next adjustment cycle, the rapid phase compensation method is adopted to directly reduce the phase difference to within 5µs. In the subsequent phase monitoring process, the phase difference between the master earbud and the slave earbud is less than the first threshold value θ_Thre1, and the frequency synchronization method is adopted to implement the frequency synchronization between the dual earbuds, and the phase difference between the dual earbuds is relatively small.

In the embodiment of the present invention, through the above-mentioned dual earbuds frequency synchronization method, the relative phase between the dual earbuds can be rapidly reduced and the play frequency can be rapidly tracked, the relative phase difference can be kept at no more than 1 audio sample point. Accordingly, the audio play of the master earbud and the slave earbud can be accurately synchronized. From the perspective of system implementation, the method has better stability, relatively simple processing logic, and excellent implementation effect.

It should be appreciated that, although the steps in the flow charts involved in the above embodiments are displayed in sequence as indicated by the arrows, these steps are not definitely executed in the order indicated by the arrows. Unless otherwise specified herein, there is no strict order limitation for the execution of these steps, and these steps may be executed in other orders. Moreover, at least a part of the steps in the flow charts involved in the above embodiments may include multiple steps or multiple stages. These steps or stages are not definitely executed at the same time, but can be executed at different moments. These steps or stages are not definitely executed sequentially, but may be executed in turn or alternately with other steps or at least part of the steps or stages in other steps.

Based on the same inventive concept, in an embodiment of the present invention, a frequency adjustment apparatus for implementing the above-mentioned frequency adjustment method is provided. The implementation solution provided by the apparatus to solve the problem is similar to the implementation solution described in the above method, as for the specific limitations in one or more embodiments of the frequency adjustment apparatus provided below, reference can be made to the limitations on the frequency adjustment method above, which will not be repeated here.

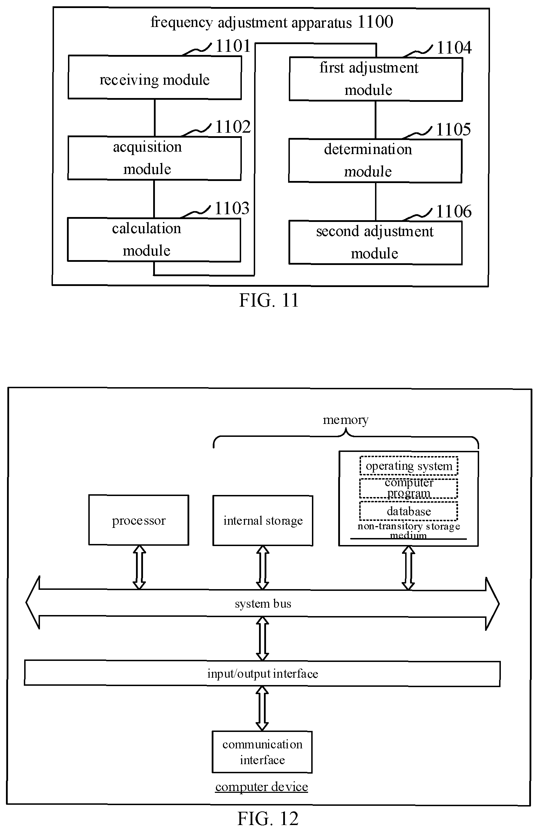

In an embodiment, as shown in FIG. 11, a frequency adjustment apparatus is provided. The frequency adjustment apparatus 1100 is configured in a slave earbud of Bluetooth earbuds. The Bluetooth earbuds include a master earbud and a slave earbud. The frequency adjustment apparatus 1100 includes a receiving module 1101, an acquisition module 1102, a calculation module 1103, a first adjustment module 1104, a determination module 1105, and a second adjustment module 1106.

The receiving module 1101 is configured to receive signaling packets periodically transmitted by the master earbud at intervals of a first time period. Each signaling packet includes a target sample point identifier and a Bluetooth clock of the master earbud corresponding to the target sample point identifier.

The acquisition module 1102 is configured to acquire a Bluetooth clock of the slave earbud corresponding to the target sample point identifier according to the target sample point identifier.

The calculation module 1103 is configured to calculate a difference between the Bluetooth clock of the master earbud and the Bluetooth clock of the slave earbud as a first phase difference.

The first adjustment module 1104 is configured to perform a rapid phase compensation processing on the clock frequency of the slave earbud according to the first phase difference when the first phase difference satisfies a phase compensation condition. The phase compensation condition includes that the first phase difference is greater than or equal to a preset threshold value.

The determination module 1105 is configured to determine a second phase difference between the Bluetooth clock of the slave earbud and the Bluetooth clock of the master earbud after the clock frequency of the slave earbud is adjusted.

The second adjustment module 1106 is configured to re-adjust the clock frequency of the slave earbud according to the first phase difference and the second phase difference.

In an embodiment, the first adjustment module 1104 is specifically configured to:
determine a first time adjustment interval, and obtain a clock frequency difference according to the first time adjustment interval and the first phase difference; obtain a first update frequency according to the clock frequency of the slave earbud and the clock frequency difference; and adjust the clock frequency of the slave earbud to the first update frequency. The first time adjustment interval refers to a time interval according to which the slave earbud adjusts its own clock frequency to the first update frequency.

In an embodiment, the first adjustment module 1104 is specifically configured to:
determine a maximum frequency adjustment value according to the clock frequency of the slave earbud, and calculate the first time adjustment interval according to the first phase difference and the maximum frequency adjustment value.

In an embodiment, the first adjustment module 1104 is specifically configured to determine a preset time adjustment interval as the first time adjustment interval, or determine the first time period as the first time adjustment interval.

In an embodiment, the apparatus may further include:
a phase calculation module configured not to calculate the latest phase difference between the master earbud and the slave earbud under a condition that a signaling packet is received within the first time adjustment interval, and configured to calculate the latest phase difference between the master earbud and the slave earbud under a condition that a signaling packet is received outside the first time adjustment interval when the first time adjustment interval is greater than the first time period.

In an embodiment, the second adjustment module 1106 is specifically configured to:
calculate a target difference value between the first phase difference and the second phase difference when the second phase difference is less than the preset threshold value; obtain a frequency deviation according to the target difference value and the second time adjustment interval; perform frequency synchronization adjustment processing on the clock frequency of the slave earbud according to the frequency deviation when the frequency deviation is not less than a preset frequency adjustment step; perform accumulated phase fine-adjustment processing on the clock frequency of the slave earbud according to a minimum frequency step when the frequency deviation is less than the preset frequency adjustment step. The step of performing the frequency synchronization adjustment processing on the clock frequency of the slave earbud according to the frequency deviation may include: a second update frequency is obtained according to the frequency deviation and the clock frequency of the slave earbud, and the clock frequency of the slave earbud is adjusted to the second update frequency within the first time period.

In an embodiment, the second adjustment module 1106 is specifically configured to:
adjust the clock frequency of the slave earbud to a first clock frequency value within the first time period when the Bluetooth clock corresponding to the master earbud is earlier than the Bluetooth clock corresponding to the slave earbud, where the first clock frequency value is obtained by increasing the clock frequency of the slave earbud by one minimum frequency step; adjust the clock frequency of the slave earbud to a second clock frequency value within the first time period when the Bluetooth clock corresponding to the master earbud is later than the Bluetooth clock corresponding to the slave earbud, where the second clock frequency value is obtained by reducing the clock frequency of the slave earbud by one minimum frequency step.

In an embodiment, the apparatus may further include:
a divergence determination module configured to determine whether a phase divergence condition is satisfied according to the first phase difference and the second phase difference, where the phase divergence condition includes: a product of the first phase difference and the second phase difference is greater than zero and an absolute value of the first phase difference is greater than an absolute value of the second phase difference; determine and transmit a target frequency adjustment value to the master earbud when the phase divergence condition is satisfied, where the target frequency adjustment value is configured to instruct the master earbud to adjust its own clock frequency according to the target frequency adjustment value; perform the rapid phase compensation processing on the clock frequency of the slave earbud according to the second phase difference when the phase divergence condition is not satisfied and the second phase difference is greater than the preset threshold value.

In an embodiment, the slave earbud stores a plurality of corresponding relationships between phase difference value intervals and frequency adjustment values. The divergence determination module is specifically configured to:
determine a target difference value between the first phase difference and the second phase difference; determine a target phase difference value interval to which the target difference value belongs according to the target difference value; determine a frequency adjustment value corresponding to the target phase difference value interval as the target frequency adjustment value.

Modules in the above frequency adjustment apparatus can be fully or partially implemented by software, hardware or a combination thereof. The above modules may be embedded in or independent of a processor in a computer device in the form of hardware, or may be stored in a memory in a computer device in the form of software, so that the processor can invoke and execute operations corresponding to the above modules.

In an embodiment, a computer device is provided, and an internal structure diagram thereof may be shown in FIG. 12. The computer device includes a processor, a memory, an input/output interface (I/O), and a communication interface. The processor, the memory and the input/output interface are connected to each other via a system bus, and the communication interface is connected to the system bus via the input/output interface. The processor of the computer device is configured to provide computing and control capabilities. The memory of the computer device includes a non-transitory storage medium and an internal storage. The non-transitory storage medium stores an operating system, a computer program, and a database. The internal storage provides an environment for operations of the operating system and computer programs in the non-transitory storage medium. The database of the computer device is configured to store frequency adjustment data. The input/output interface of the computer device is configured to exchange information between the processor and an external device. The communication interface of the computer device is configured to communicate with an external terminal via a network connection. When the computer program is executed by the processor, a frequency adjustment method is implemented.

Those skilled in the art may appreciate that the structure shown in FIG. 12 is merely a block diagram of a partial structure related to the solution of the present application, and does not constitute a limitation on the computer device to which the solution of the present application is applied. The specific computer device may include more or fewer components than shown in the figure, or combine certain components, or have a different arrangement of components.

In an embodiment, Bluetooth earbuds are provided, which includes a master earbud and a slave earbud. The slave earbud includes a processor and a memory storing a computer program. The processor, when executing the computer program, may implement the steps in the above method embodiments.

In an embodiment, a computer-readable storage medium is provided, on which a computer program is stored. The computer program, when executed by a processor, may cause the processor to implement the steps in the above-mentioned method embodiments.

In an embodiment, a computer program product is provided, including a computer program. The computer program, when executed by a processor, may cause the processor to implement the steps in the above-mentioned method embodiments.

A person skilled in the art may understand that all or part of the processes in the above-mentioned embodiment methods can be implemented by instructing related hardware through a computer program. The computer program can be stored in a non-transitory computer-readable storage medium. When the computer program is executed, the procedures of the embodiments of the method may be included. Any reference to a memory, a database, or other medium used in the embodiments provided in the present application may include at least one of a non-transitory memory and a transitory memory. The non-transitory memory may include a read-only memory (ROM), a magnetic tape, a floppy disk, a flash memory, an optical storage, a high-density embedded non-transitory memory, a resistive random access memory (ReRAM), a magnetoresistive random access memory (MRAM), a ferroelectric random access memory (FRAM), a phase change memory (PCM), a graphene memory, etc. The transitory memory may include a random access memory (RAM) or an external cache memory, etc. By way of illustration and not limitation, RAM may be in various forms, such as a static random access memory (SRAM) or a dynamic random access memory (DRAM), etc. The database involved in each embodiment of the present invention may include at least one of a relational database and a non-relational database. The non-relational databases may include, but are not limited to, distributed databases based on blockchain. The processor involved in each embodiment of the present invention may be a general-purpose processor, a central processing unit, a graphics processor, a digital signal processor, a programmable logic unit, a data processing logic unit based on quantum computing, etc., which is not limited thereto.

The technical features in the above embodiments may be combined arbitrarily. In order to make the description concise, all possible combinations of the technical features in the above embodiments are not described. However, as long as there is no contradiction in the combinations of these technical features, these combinations should be considered to be within the scope of the present application.

The above-described embodiments only express several implementation modes of the present disclosure, and the descriptions are relatively specific and detailed, but should not be constructed as limiting the scope of the present application. It should be noted that, those of ordinary skill in the art can make several transformations and improvements without departing from the concept of the present application, and these all fall within the protection scope of the present application. Therefore, the protection scope of the present application should be subject to the appended claims.

## Claims

1. A frequency adjustment method, applied to a slave earbud of Bluetooth earbuds, the Bluetooth earbuds comprising a master earbud and the slave earbud, the method comprising:
receiving signaling packets periodically transmitted by the master earbud at intervals of a first time period, each signaling packet comprising a target sample point identifier and a Bluetooth clock of the master earbud corresponding to the target sample point identifier;
acquiring a Bluetooth clock of the slave earbud corresponding to the target sample point identifier according to the target sample point identifier;
calculating a difference between the Bluetooth clock of the master earbud and the Bluetooth clock of the slave earbud as a first phase difference;
performing rapid phase compensation processing on a clock frequency of the slave earbud according to the first phase difference when the first phase difference satisfies a phase compensation condition, the phase compensation condition comprising that the first phase difference is greater than or equal to a preset threshold value;
determining a second phase difference between the Bluetooth clock of the slave earbud and the Bluetooth clock of the master earbud after the clock frequency of the slave earbud is adjusted; and
re-adjusting the clock frequency of the slave earbud according to the first phase difference and the second phase difference.

2. The method according to claim 1, wherein performing the rapid phase compensation processing on the clock frequency of the slave earbud according to the first phase difference comprises:
determining a first time adjustment interval, and obtaining a clock frequency difference according to the first time adjustment interval and the first phase difference;
obtaining a first update frequency according to the clock frequency of the slave earbud and the clock frequency difference; and
adjusting the clock frequency of the slave earbud to the first update frequency, the first time adjustment interval referring to a time interval according to which the slave earbud adjusts the clock frequency thereof to the first update frequency.

3. The method according to claim 2, wherein determining the first time adjustment interval comprises:
determining a maximum frequency adjustment value according to the clock frequency of the slave earbud; and
calculating the first time adjustment interval according to the first phase difference and the maximum frequency adjustment value.

4. The method according to claim 3, wherein determining the first time adjustment interval comprises:
determining a preset time adjustment interval as the first time adjustment interval, or
determining the first time period as the first time adjustment interval.

5. The method according to claim 4, further comprising:
when the first time adjustment interval is greater than the first time period, not calculating the latest phase difference between the master earbud and the slave earbud under a condition that a signaling packet is received within the first time adjustment interval, and calculating the latest phase difference between the master earbud and the slave earbud under a condition that a signaling packet is received outside the first time adjustment interval.

6. The method according to claim 1, wherein re-adjusting the clock frequency of the slave earbud according to the first phase difference and the second phase difference comprises:
calculating a target difference value between the first phase difference and the second phase difference when the second phase difference is less than the preset threshold value;
obtaining a frequency deviation according to the target difference value and the second time adjustment interval, wherein the second time adjustment interval refers to a time difference between time corresponding to the second phase difference and time corresponding to the first phase difference;
performing frequency synchronization adjustment processing on the clock frequency of the slave earbud according to the frequency deviation when the frequency deviation is not less than a preset frequency adjustment step; and
performing accumulated phase fine-adjustment processing on the clock frequency of the slave earbud according to a minimum frequency step when the frequency deviation is less than the preset frequency adjustment step,
wherein performing the frequency synchronization adjustment processing on the clock frequency of the slave earbud according to the frequency deviation comprises obtaining a second update frequency according to the frequency deviation and the clock frequency of the slave earbud, and adjusting the clock frequency of the slave earbud to the second update frequency within the first time period.

7. The method according to claim 6, wherein performing the accumulated phase fine-adjustment processing on the clock frequency of the slave earbud according to the minimum frequency step comprises:
adjusting the clock frequency of the slave earbud to a first clock frequency value within the first time period when the Bluetooth clock corresponding to the master earbud is earlier than the Bluetooth clock corresponding to the slave earbud, wherein the first clock frequency value is obtained by increasing the clock frequency of the slave earbud by one minimum frequency step; and
adjusting the clock frequency of the slave earbud to a second clock frequency value within the first time period when the Bluetooth clock corresponding to the master earbud is later than the Bluetooth clock corresponding to the slave earbud, wherein the second clock frequency value is obtained by reducing the clock frequency of the slave earbud by one minimum frequency step.

8. The method according to claim 1, further comprising:
determining whether a phase divergence condition is satisfied according to the first phase difference and the second phase difference, wherein the phase divergence condition comprises that a product of the first phase difference and the second phase difference is greater than zero and an absolute value of the first phase difference is greater than an absolute value of the second phase difference;
determining and transmitting a target frequency adjustment value to the master earbud when the phase divergence condition is satisfied, wherein the target frequency adjustment value is configured to instruct the master earbud to adjust the clock frequency thereof according to the target frequency adjustment value; and
performing the rapid phase compensation processing on the clock frequency of the slave earbud according to the second phase difference when the phase divergence condition is not satisfied and the second phase difference is greater than the preset threshold value.

9. The method according to claim 8, wherein the slave earbud stores a plurality of corresponding relationships between phase difference value intervals and frequency adjustment values;
wherein determining the target frequency adjustment value comprises:
determining a target difference value between the first phase difference and the second phase difference;
determining a target phase difference value interval to which the target difference value belongs according to the target difference value; and
determining a frequency adjustment value corresponding to the target phase difference value interval as the target frequency adjustment value.

10. A frequency adjustment apparatus, applied to a slave earbud of Bluetooth earbuds, the Bluetooth earbuds comprising a master earbud and the slave earbud, the apparatus comprising:
a receiving module, configured to receive signaling packets periodically transmitted by the master earbud at intervals of a first time period, each signaling packet comprising a target sample point identifier and a Bluetooth clock of the master earbud corresponding to the target sample point identifier;
an acquisition module, configured to acquire a Bluetooth clock of the slave earbud corresponding to the target sample point identifier according to the target sample point identifier;
a calculation module, configured to calculate a difference between the Bluetooth clock of the master earbud and the Bluetooth clock of the slave earbud as a first phase difference;
a first adjustment module, configured to perform rapid phase compensation processing on the clock frequency of the slave earbud according to the first phase difference when the first phase difference satisfies a phase compensation condition, the phase compensation condition comprising that the first phase difference is greater than or equal to a preset threshold value;
a determination module, configured to determine a second phase difference between the Bluetooth clock of the slave earbud and the Bluetooth clock of the master earbud after the clock frequency of the slave earbud is adjusted; and
a second adjustment module, configured to re-adjust the clock frequency of the slave earbud according to the first phase difference and the second phase difference.

11. The frequency adjustment apparatus according to claim 10, wherein the first adjustment module is configured to:
determine a first time adjustment interval, and obtain a clock frequency difference according to the first time adjustment interval and the first phase difference;
obtain a first update frequency according to the clock frequency of the slave earbud and the clock frequency difference;
adjust the clock frequency of the slave earbud to the first update frequency, wherein the first time adjustment interval refers to a time interval according to which the slave earbud adjusts the clock frequency thereof to the first update frequency.

12. The frequency adjustment apparatus according to claim 11, wherein the first adjustment module is configured to:
determine a maximum frequency adjustment value according to the clock frequency of the slave earbud; and
calculate the first time adjustment interval according to the first phase difference and the maximum frequency adjustment value.

13. The frequency adjustment apparatus according to claim 12, wherein the first adjustment module is configured to determine a preset time adjustment interval as the first time adjustment interval, or
determine the first time period as the first time adjustment interval.

14. The frequency adjustment apparatus according to claim 13, further comprising:
a phase calculation module configured not to calculate the latest phase difference between the master earbud and the slave earbud under a condition that a signaling packet is received within the first time adjustment interval, and configured to calculate the latest phase difference between the master earbud and the slave earbud under a condition that a signaling packet is received outside the first time adjustment interval when the first time adjustment interval is greater than the first time period.

15. The frequency adjustment apparatus according to claim 10, wherein the second adjustment module is configured to:
calculate a target difference value between the first phase difference and the second phase difference when the second phase difference is less than the preset threshold value;
obtain a frequency deviation according to the target difference value and the second time adjustment interval, wherein the second time adjustment interval refers to a time difference between time corresponding to the second phase difference and time corresponding to the first phase difference;
perform frequency synchronization adjustment processing on the clock frequency of the slave earbud according to the frequency deviation when the frequency deviation is not less than a preset frequency adjustment step; and
perform accumulated phase fine-adjustment processing on the clock frequency of the slave earbud according to a minimum frequency step when the frequency deviation is less than the preset frequency adjustment step;
wherein performing the frequency synchronization adjustment processing on the clock frequency of the slave earbud according to the frequency deviation comprises: obtaining a second update frequency according to the frequency deviation and the clock frequency of the slave earbud, and adjusting the clock frequency of the slave earbud to the second update frequency within the first time period.

16. The frequency adjustment apparatus according to claim 15, wherein the second adjustment module is configured to:
adjust the clock frequency of the slave earbud to a first clock frequency value within the first time period when the Bluetooth clock corresponding to the master earbud is earlier than the Bluetooth clock corresponding to the slave earbud, wherein the first clock frequency value is obtained by increasing the clock frequency of the slave earbud by one minimum frequency step; and
adjust the clock frequency of the slave earbud to a second clock frequency value within the first time period when the Bluetooth clock corresponding to the master earbud is later than the Bluetooth clock corresponding to the slave earbud, wherein the second clock frequency value is obtained by reducing the clock frequency of the slave earbud by one minimum frequency step.

17. The frequency adjustment apparatus according to claim 10, further comprising:
a divergence determination module configured to:
determine whether a phase divergence condition is satisfied according to the first phase difference and the second phase difference, wherein the phase divergence condition comprises that a product of the first phase difference and the second phase difference is greater than zero and an absolute value of the first phase difference is greater than an absolute value of the second phase difference;
determine and transmit a target frequency adjustment value to the master earbud when the phase divergence condition is satisfied, wherein the target frequency adjustment value is configured to instruct the master earbud to adjust the clock frequency thereof according to the target frequency adjustment value;
perform the rapid phase compensation processing on the clock frequency of the slave earbud according to the second phase difference when the phase divergence condition is not satisfied and the second phase difference is greater than the preset threshold value.

18. Bluetooth earbuds comprising a master earbud and a slave earbud, the slave earbud comprising a processor and a memory storing a computer program, wherein the processor, when executing the computer program, implements the method of any one of claims 1 to 9.

19. A computer-readable storage medium, on which a computer program is stored, wherein the computer program, when executed by a processor, causes the processor to implement the method of any one of claims 1 to 9.

20. A computer program product, comprising a computer program, wherein the computer program, when executed by a processor, causes the processor to implement the method of any one of claims 1 to 9.
